# EUROPEAN PATENT APPLICATION

(11) **EP 2 276 029 A1**
(43) Date of publication of application: **19.01.2011**
(21) Application number: 09746478.8
(22) Date of filing: 20.04.2009
(51) Int. Cl.: G11B 20/10, H04N 5/85, H04N 5/91

(54) **ADDITIONAL CONTENT MANAGEMENT DEVICE AND MANAGEMENT METHOD**

(30) Priority: 16.05.2008 JP 2008129170
(71) Applicant: Sharp Kabushiki Kaisha, Osaka-shi, Osaka 545-8522 (JP)
(72) Inventor: The designation of the inventor has not yet been filed
(74) Representative: Müller - Hoffmann & Partner
(86) International application number: PCT/JP2009/057863
(87) International publication number: WO 2009/139271

(57) **Abstract**

A package medium and an additional content are always managed integrally so that an original content recorded in the package medium can always be used along with the additional content. The additional content using a virtual package function specified as an expanded function of Blu-ray is managed. An additional content management device comprises an additional content acquiring means which can be applied to, for example, a recording/reproducing device (10) and acquires additional content stored in an external storage means, and an additional content recording means which stores the acquired additional content in a predetermined recording medium. The additional content recording means detects a hybrid Blu-ray disk (BD) (20) provided with both of a data-read-only ROM area (21) and a data-writable recording area (22), and records the additional content, acquired by the additional content acquiring means, in the recording area (22) of the BD (20).

## Description

### TECHNICAL FIELD

The present invention relates to an additional content management device and management method and more particularly to a management device and a management method for managing additional contents using a virtual package function defined as an expanded function of Blu-ray.

### BACKGROUND ART

Blu-ray Disc (BD) is an optical disc standard using a blue-violet semiconductor laser and is in widespread use, and a recording/reproducing apparatus is provided that can use a package media of BD (BD-ROM). One of expanded functions of the Blu-ray standard is a virtual package function utilizing BD-J (Blu-ray Java (registered trademark)). This virtual package function is a function of reading an original content stored in a package media and an additional content stored in a recording medium at hand at the same time to make it look as if a virtual package medium maintained in the latest condition is reproduced.

By using the virtual package function as described above, for example, data of a reproduction-only BD-ROM can virtually be updated via the Internet or a medium such as a memory card. For example, additional contents such as new subtitle information, audio commentary, a new video clip, or a Blu-ray Java (registered trademark) application for an original content can be added/updated after providing a BD-ROM recording the original content to a user.

An additional content provided from the internet or a medium such as a memory card is saved in a local storage of a recording/reproducing apparatus (or a reproduction-only apparatus may be used). Therefore, to support the virtual package function, the recording/reproducing apparatus needs a local storage (e.g., HDD, an internal memory, or an external memory) which has over a certain capacity.

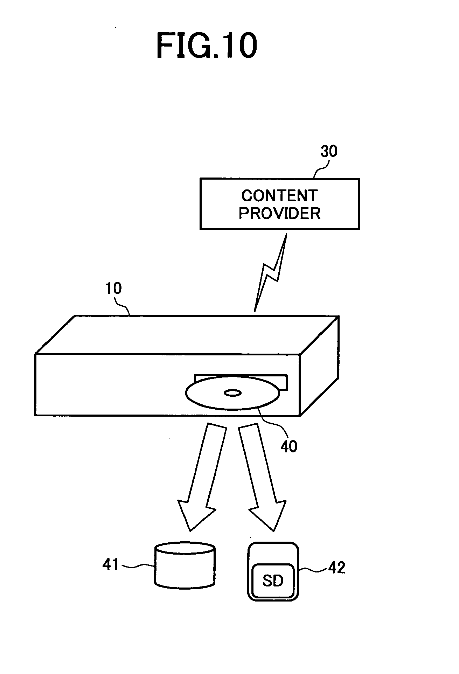

Fig. 10 is a diagram for explaining a conventional additional content saving processing in the virtual package function of BD-ROM.
A recording/reproducing apparatus 10 has a reproduction function for a BD-ROM 40. A user can reproduce and enjoy an original content recorded beforehand in the BD-ROM 40 with the recording/reproducing apparatus 10.

For example, the recording/reproducing apparatus 10 is able to acquire an additional content through a network from a content provider that provides the original content. Although not depicted, the additional content is also acquirable through an external recording medium as described above. In such a case, an internal storage (such as HDD) 41 of the recording/reproducing apparatus 10 or an external memory 42 such as an SD card is conventionally used as a storage destination of the additional content.

The additional content acquired by the recording/reproducing apparatus 10 is managed to have one-to-one correspondence to the BD-ROM 40 recording the original content. Therefore, if the acquired additional content is used to reproduce the original content, it is always needed to use the additional content that is managed to have one-to-one correspondence to the BD-ROM 40 recording the original content.

For management of such a content file and data recorded in a local storage, for example, Patent Document 1 discloses a reproducing apparatus that handles a content file recorded in a disc and an update file recorded in a local storage. This reproducing apparatus handles downloaded data with consideration that a path name and a file name in the local storage are different from a file having a path name and a file name in a virtual file system based on a path name specified in a src_file_name field of a Manifest() section and a path name specified in a dst_file_name field.

Patent Document 2 discloses a technique for copying a portion of data on a recording medium mounted on a reproducing apparatus onto a recording portion within the reproducing apparatus to reproduce the data in a synchronized manner. An optical disc records a Clip1 including an AV Stream referred to by a PlayItem indicating a main path and a Clip including a SubAV Stream referred to by a SubPlayItem indicating a sub-path in advance. The reproducing device copies the Clip recorded in the optical disc onto a local storage in advance such that the SubPlayItem can refer to the Clip of the local storage instead of the Clip in the optical disc to perform read-out. Therefore, a manifest file is generated or updated, and stored in the local storage.

### PRIOR ART DOCUMENT

### PATENT DOCUMENT

Patent Document 1: Japanese Laid-Open Patent Publication No. 2007-250161
Patent Document 2: Japanese Laid-Open Patent Publication No. 2007-257685

### SUMMARY OF THE INVENTION

### PROBLEMS TO BE SOLVED BY THE INVENTION

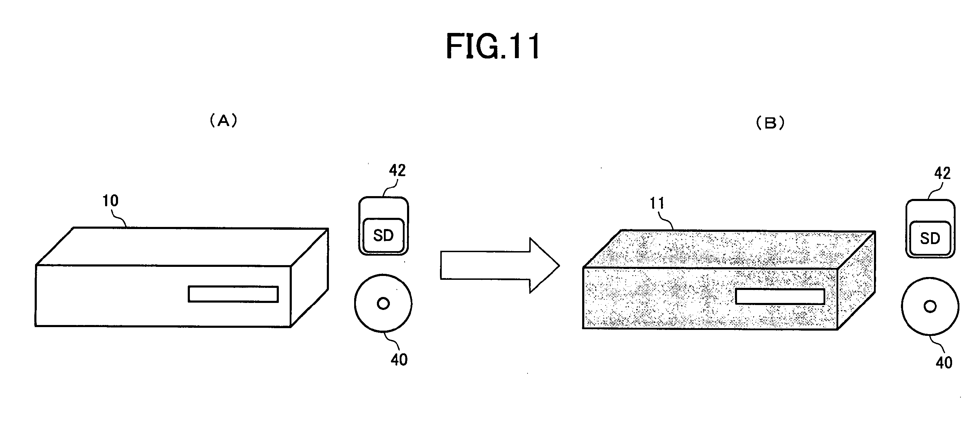

Fig. 11 is a diagram for explaining an example of a problem generated by a conventional virtual package function. As described above, in the conventional virtual package function, an original content recorded on the BD-ROM 40 and an additional content are managed to have one-to-one correspondence with each other, and the additional content is recorded in a medium such as an internal storage or an external memory. Therefore, the BD-ROM 40 recording the original content and the recording medium recording the additional content must always be used together.

For example, as depicted in Fig. 11(A), it is assumed that a user using the recording/reproducing apparatus 10 owns the BD-ROM 40 recording an original content and records an additional content for the original content in the external memory 42 using an SD card that is one of local storages in advance.
For example, if the user owns a plurality of recording/reproducing apparatuses and attempts to reproduce the original content with another recording/reproducing apparatus 11 instead of the recording/reproducing apparatus 10, which is usually used, the BD-ROM 40 is moved to the another recording/reproducing apparatus 11 and the external memory 42 recording the additional content must also be moved to the another recording/reproducing apparatus 11 (Fig. 11(B)).
If the additional content is recorded by using the external memory 42 such as an SD card, a user must always carry or move the external memory 42 and the BD-ROM 40 recording the original content as a set, which is problematically troublesome and less user-friendly.

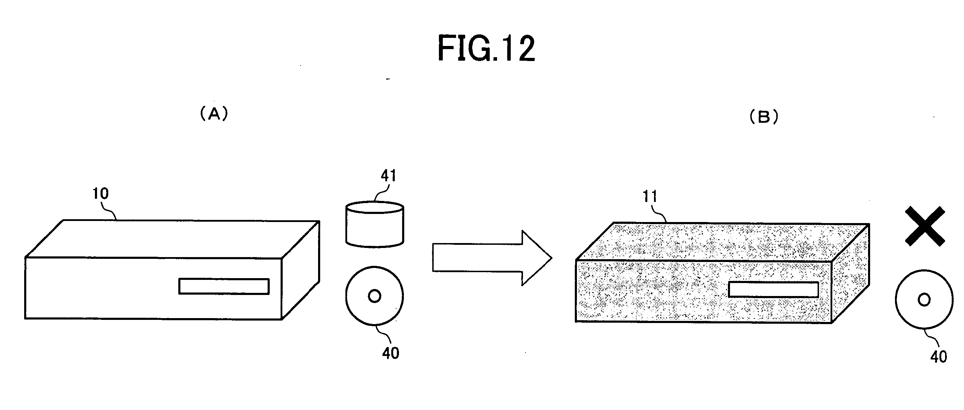

Fig. 12 is a diagram for explaining another example of a problem generated by the conventional virtual package function. Although the external memory 42 such as an SD card is used as a local storage recording an additional content in the example of Fig. 11, an internal storage (such as HDD) of the recording/reproducing apparatus 10 is used as a local storage in this example.
In this case, as depicted in Fig. 12 (A), if the BD-ROM 40 recording the original content is mounted on the recording/reproducing apparatus 10, it is possible to reproduce the original content using the additional content in the internal storage 41. However, if it is attempted to reproduce the original content with the another recording/reproducing apparatus 11, it is impossible to reproduce the original content using the additional content since the another recording/reproducing apparatus 11 has no additional content (Fig. 12(B)).

A technique for solving the problems related to handling of a local storage in the virtual package function as described above is not disclosed in Patent Documents 1 and 2.

The present invention was conceived in view of the situations and it is therefore the object of the present invention to provide a content management device and a content management method capable of always using an original content along with an additional content by always integrally managing the original content recorded in a package medium and the additional content.

### MEANS FOR SOLVING THE PROBLEMS

To solve the problem, a first technical means of the present application is a management device of an additional content added to an original content by using a virtual package function defined as an expanded function of Blu-ray, comprising: an additional content acquiring means that acquires the additional content stored in an external storage means; and an additional content recording means that records an additional content acquired by the additional content acquiring means in a predetermined recording medium, wherein the additional content recording means detects a hybrid recording medium that includes both a ROM area that is used only for reading data and a recording area that is used for writing data at any time and records the additional content acquired by the additional content acquiring means in the recording area of the detected hybrid recording medium.

A second technical means is the first technical means, wherein when recording the additional content in the recording area of the hybrid recording medium, the additional content recording means recodes the additional content by having one-to-one correspondence to an original content recorded in the ROM area.

A third technical means is the first or second technical means, wherein the additional content recording means temporarily stores the additional content acquired by the additional content acquiring means in a predetermined temporary storage means and moves the additional content stored in the temporary storage means to the recording area to perform recording of the additional content in the recording area.

A fourth technical means is any one of the first to third technical means, wherein the management device of the additional content has a content reproducing means that enables reproduction of an original content and an additional content recorded in the hybrid recording medium, and when detecting that the additional content is recorded in the hybrid recording medium, the content reproducing means reads the additional content from the recording medium and temporarily stores it into the predetermined temporary storage means, and reproduces the additional content stored in the temporary storage means and the original content recorded in the hybrid recording medium.

A fifth technical means is any one of the first to fourth technical means, comprising an additional content duplicating/moving means that duplicates or moves an additional content stored in an external memory attached in the management device of the additional content to the hybrid recording medium, wherein the additional content duplicating/moving means detects whether the hybrid recording medium is attached in a recordable manner in accordance with input of instruction information instructing the duplication or movement, wherein if the recordable hybrid recording medium is detected, the additional content duplicating/moving means detects whether the additional content available for the duplication or movement exists within the external memory, and wherein if the additional content available for the duplication or movement is detected within the external memory, the additional content duplicating/moving means duplicates or moves the additional content recorded in the external memory into the recording area of the detected hybrid recording medium.

A sixth technical means is any one of the first to fourth technical means, comprising an additional content duplicating/moving means that duplicates or moves an additional content stored in an external memory attached in the management device of the additional content to the hybrid recording medium, wherein the additional content duplicating/moving means detects whether the hybrid recording medium is attached in a recordable manner, wherein when the hybrid recording medium is attached in a recordable manner, if instruction information instructing the duplication or movement is input, the additional content duplicating/moving means detects whether the additional content available for the duplication or movement exists within the external memory, and wherein if the additional content available for the duplication or movement is detected within the external memory, the additional content duplicating/moving means duplicates or moves the additional content recorded in the external memory into the recording area of the hybrid recording medium.

A seventh technical means is the fifth or sixth technical means, wherein the additional content duplicating/moving means has a function that enables the movement or duplication of the additional content from the hybrid recording medium having the additional content recorded thereon to an external memory, wherein if instruction information is input that instructs duplication or movement of the additional content from the hybrid recording medium to an external memory, the additional content duplicating/moving means detects whether an additional content available for duplication or movement exists in the hybrid recording medium attached in the management device, wherein if it is detected that the additional content available for the duplication or movement exists in the hybrid recording medium, the additional content duplicating/moving means detects whether an external memory is attached in a recordable manner, and wherein if the recordable external memory is detected, the additional content duplicating/moving means duplicates or moves the additional content recorded in the hybrid recording medium to the detected recordable external memory.

An eighth technical means is a management method of an additional content using a virtual package function defined as an expanded function of Blu-ray, comprising: an additional content acquiring step of acquiring the additional content stored in an external storage means by a recording/reproducing apparatus; and an additional content recording step of recording an additional content acquired by the additional content acquiring means into a predetermined recording medium by the recording/reproducing apparatus, wherein at the additional content recording step, a hybrid recording medium is detected that includes both a ROM area that is used only for reading data and a recording area that is used for writing data at any time and records the additional content acquired by the additional content acquiring means in the recording area of the detected hybrid recording medium.

### EFFECT OF THE INVENTION

The present invention is capable of always using an original content along with an additional content by always integrally managing the original content recorded in a package medium and the additional content.

### BRIEF DESCRIPTION OF DRAWINGS

[Fig. 1] Fig. 1 is a conceptual diagram of an embodiment of a content management device according to the present invention.
[Fig. 2] Fig. 2 is a block diagram of an exemplary configuration of a recording/reproducing apparatus used for the content management device according to the present invention.
[Fig. 3] Fig. 3 is a diagram for explaining an exemplary configuration of a hybrid-type BD applicable to the content management device of the present invention.
[Fig. 4] Fig. 4 is a flowchart for explaining an example of the additional content recording processing in a content management method of the present invention.
[Fig. 5] Fig. 5 is a flowchart for explaining another example of the additional content recording processing in the content management method of the present invention.
[Fig. 6] Fig. 6 is a flowchart for explaining an example of the content reproducing processing in the content management method of the present invention.
[Fig. 7] Fig. 7 is a flowchart for explaining an example of the processing for moving an additional content to a disc in the content management method of the present invention.
[Fig. 8] Fig. 8 is a flowchart for explaining another example of the processing for moving an additional content to a disc in the content management method of the present invention.
[Fig. 9] Fig. 9 is a flowchart for explaining an example of the processing for moving an additional content to an external memory according to the present invention.
[Fig. 10] Fig. 10 is a diagram for explaining the conventional additional content saving processing in a virtual package function of a BD-ROM.
[Fig. 11] Fig. 11 is a diagram for explaining an example of a problem generated by a conventional virtual package function.
[Fig. 12] Fig. 12 is a diagram for explaining another example of a problem generated by the conventional virtual package function.

### EMBODIMENTS OF THE INVENTION

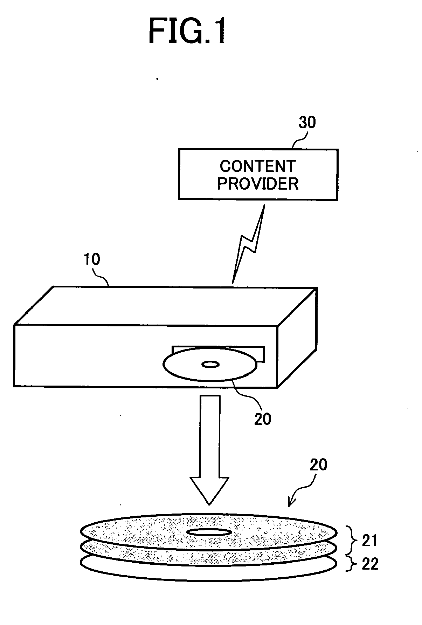

Fig. 1 is a conceptual diagram of an embodiment of a content management device according to the present invention. The embodiment of the present invention uses a disc medium (hybrid recording medium) including a read only area (ROM area) and a writable recording area (RE area) to record an additional content corresponding to a virtual package function of the BD-ROM standard together with an original content in one disc medium. A hybrid BD (blu-ray disc) 20 including a ROM area 21 and a recording area 22 as described above is preferably usable as a disc medium. A BD configured as such a hybrid recording medium will be referred to simply as the BD 20 in the following description.

The content management device according to the present invention is applicable to a recording/reproducing apparatus 10 including a content reproducing function and a recording function for recording the additional content described above in the BD 20. The recording/reproducing apparatus 10 includes an additional content acquiring means that acquires an additional content using the virtual package function defined as an expanded function of Blu-ray from an external storage means, and an additional content recording means that records the additional content acquired by the additional content acquiring means in the BD 20 that is a predetermined recording medium.

The original content is generally recorded in the ROM area of the BD 20 in advance and is provided to a user as a package medium. If the user adds a content through the virtual package function of the Blu-ray standard, the additional content is recorded in the recording area of the BD 20.

The recording/reproducing apparatus 10 can acquire the additional content from the external storage means as described above. The external storage means includes a system of a content provider 30 via a network. The recording/reproducing apparatus downloads and acquires the additional content from the content provider 30. Alternatively, the additional content may be acquired from an external memory (not shown) serving as the external storage means described above.

The recording/reproducing apparatus 10 records the acquired additional content in the recording area of the BD 20. This causes the original content and the additional content to exist as a pair in the one BD 20 and eliminates the need for the user to manage the additional content. When the content is recorded in the BD 20, the copyright protection technology according to AACS (Advanced Access Content System) employed in the BD standard is used to write the content into the recording layer to protect the copyright of the content.

Although a user must manage a combination of a package medium recording the original content and the additional content for every device or external memory in a conventional technique, according to the embodiment of the present invention, it is possible to manage a combination of the original content and the additional content as a pair in the one BD 20 and, therefore, the management by a user is unnecessary. It is also advantageous that the risk of loss of data due to physical damage, etc., of the recording/reproducing apparatus is eliminated.
There are some other advantages including that the BD 20 already enables to encrypt information recorded on the disc and to safely manage the encrypted information and that the addition of a new function to the recording/reproducing apparatus 10 is not necessary because the recording/reproducing apparatus itself is equipped with a means for encryption.

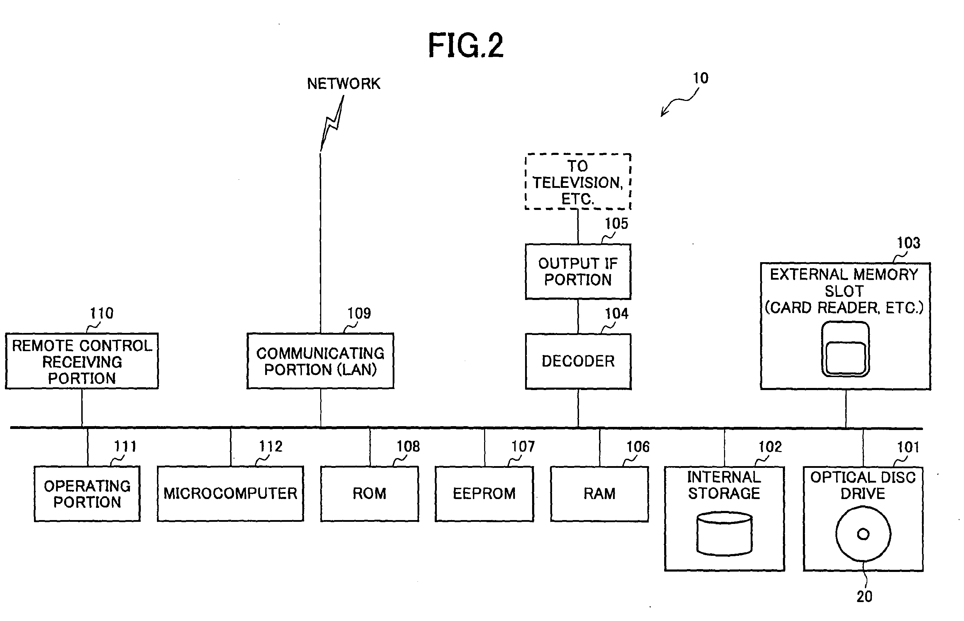

Fig. 2 is a block diagram of an exemplary configuration of a recording/reproducing apparatus applicable to the content management device according to the present invention. The recording/reproducing apparatus 10 includes an optical disc drive 101 capable of reading and writing data on an optical disc, an internal storage 102 such as HDD, and an external memory slot 103 for reading/writing data in an external memory such as an SD card. A card reader or a USB I/F is applicable to the external memory slot 103.

The recording/reproducing apparatus 10 also includes a decoder 104 that decodes and outputs encoded data recorded in the BD and the internal storage 102 or an external memory, an output IF portion 105 that outputs a data signal output from the decoder 104 to an external device such as a television, a communicating portion 109 such as a LAN I/F for communicating with an external device or system through a network, a remote control receiving portion 110 that receives a remote control signal transmitted from a remote controller; an operating portion 111 that accepts an operational input from a user, a microcomputer 112 that control the portions of the apparatus; and a ROM 108, an EEPROM 107, and a RAM 106 as storage memories for programs and data.

The configuration of this example employs the BD 20, which is a hybrid-type optical disc including a read only ROM area and a rewritable recording area, as a package medium recording the original content. The BD 20 is provided with an original content recorded in advance in the ROM area and a user can watch the reproduced content on a television, etc. , connected to the recording/reproducing apparatus 10 by reproducing the BD 20 inserted into the optical disc drive 101 of the recording/reproducing apparatus 10.

The recording/reproducing apparatus 10 can acquire an additional package of the original content conforming to the virtual package function of the Blu-ray standard from a content provider, etc., through a network. Alternatively, it is possible to acquire the additional package from an external memory via the external memory slot 103. As a result, the content acquiring means of the present invention is realized.
The acquired additional package is recorded in the recording area of the BD 20 inserted in the optical disc drive 101. As a result, a content recording means of the present invention is realized.

In the BD 20, the original content and the additional content are usable by having one-to-one correspondence with each other in accordance with the Blu-ray standard. With this, it is possible to reproduce/watch the virtually updated original content by utilizing the additional content. Since the original content and the additional content are recorded by having correspondence with each other in the one BD 20 in this embodiment, it is unnecessary for the user to manage the additional content and it becomes possible to create a user-friendly package medium.

The recording/reproducing apparatus 10 has a function of duplicating or moving the additional content stored in an external memory attached in the external memory slot 103 to the BD 20 or duplicating or moving the additional content stored in the BD 20 to an external memory attached in the external memory slot 103. This realizes a content duplicating/moving means of the present invention.

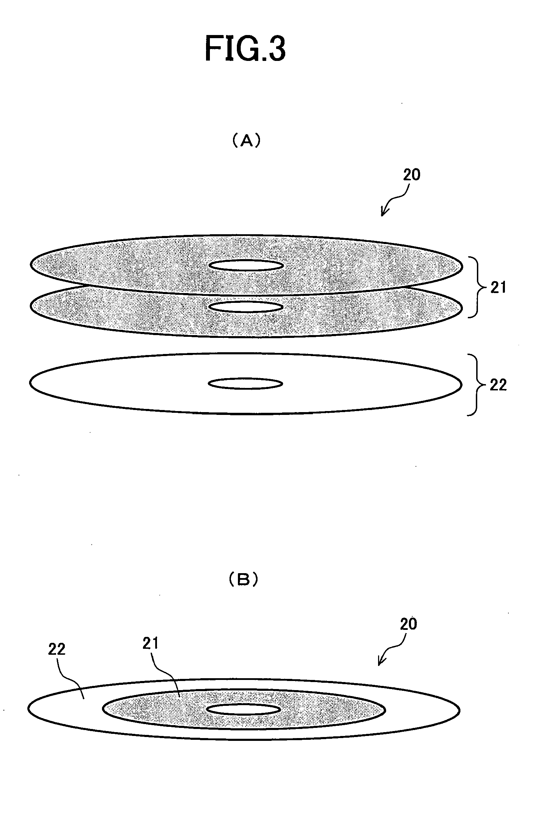

Fig. 3 is a diagram for explaining an exemplary configuration of a hybrid-type BD applicable to the content management device of the present invention. As described above, in the embodiment according to the present invention, the hybrid-type BD having the ROM area and the recording area is used to record the original content and the additional content.
For example, as described in Fig. 3 (A), the BD 20 can employ a configuration having the recording area formed as a multilayer structure, a portion of the multilayered recording layer defined as the read only ROM area 21, and a remaining portion defined as the rewritable recording area 22. Although the depicted recording layer has a three-layer configuration and two layers thereof are used as the ROM area, the multilayered configuration may include four layers or more. The positional relationship between the ROM area 21 and the recording area 22 may be a relationship opposite to that shown in Fig. 3(A), i.e., the recording area 22 may be disposed on a surface layer with the ROM area 21 located on the underside thereof.

In another configuration of the BD 20, as depicted in Fig. 3 (B), a single-layer recording area may be divided in the radial direction of the disc to form the ROM area 21 and the recording area 22. The positional relationship between the ROM area 21 and the recording area 22 may be a relationship opposite to that shown in Fig. 3(B), i.e., the recording area 22 may be disposed on the inner side of the disc with the ROM area 21 located on the outer side thereof.

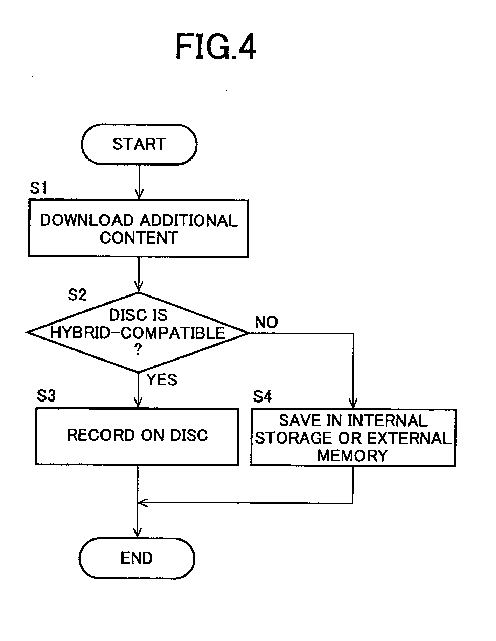

Fig. 4 is a flowchart for explaining an example of the additional content recording processing according to the present invention. This flowchart describes an example of the processing when the recording/reproducing apparatus 10 downloads and records an additional content from a content provider, etc., onto the BD 20 inserted into the recording/reproducing apparatus 10. The following description will be made with reference to the configurations of Figs. 2 and 3.

First, the recording/reproducing apparatus 10 downloads an additional content corresponding to an original content from a content provider, etc., (step S1). The recording/reproducing apparatus 10 determines whether an inserted disc is a hybrid-compatible disc (the BD 20) (step S2). It is assumed that the recording/reproducing apparatus 10 includes a mechanism determining whether a disc is hybrid.

If the disc is hybrid-compatible, the recording/reproducing apparatus 10 directly records the downloaded additional content into the recording area 22 of the disc (the BD 20) (step S3).
On the other hand, if the disc is not hybrid-compatible, the recording/reproducing apparatus 10 saves the downloaded additional content into the internal storage 102 or an external memory attached in the external memory slot 103 (step S4).
In this example, the recording/reproducing apparatus 10 determines whether the disc is hybrid-compatible, records the downloaded additional content in the recording area 22 of the disc in the case of the hybrid disc, and saves the additional content in the internal storage or the external memory in the same manner as a conventional technology if the disc is not hybrid.

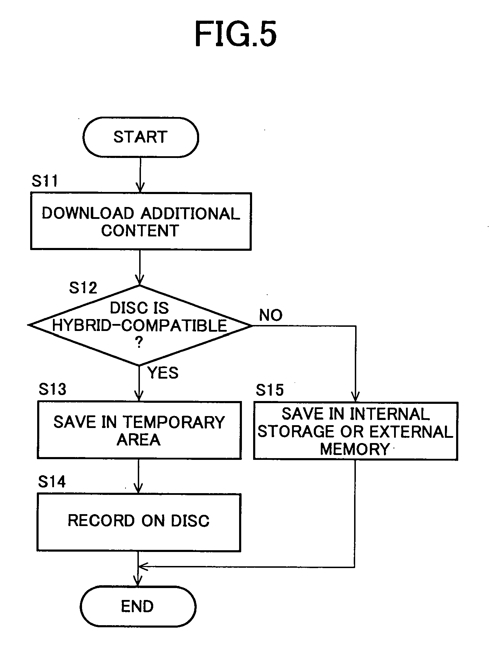

Fig. 5 is a flowchart for explaining another example of the additional content recording processing according to the present invention and describes another example of the processing when the recording/reproducing apparatus 10 downloads and records an additional content from a content provider, etc., on the hybrid BD inserted into the recording/reproducing apparatus 10.

First, the recording/reproducing apparatus 10 downloads an additional content corresponding to an original content from a content provider, etc., (step S11). The recording/reproducing apparatus 10 determines whether an inserted disc is a hybrid-compatible disc (the BD 20) (step S12). It is assumed that the recording/reproducing apparatus 10 includes a mechanism determining whether a disc is hybrid.

If the disc is hybrid-compatible, the recording/reproducing apparatus 10 saves the downloaded content in a temporary area of the recording/reproducing apparatus 10 (step S13). The temporary area is a storage area built in or accessible by the recording/reproducing apparatus and corresponds to a temporary storage means of the present invention. To the temporary area, for example, in the example of Fig. 2, the RAM 106 or the internal storage 102 is applicable. An external memory, etc. , connected to the external memory slot 103 may also be available. The additional content once saved in the temporary area is then recorded in the recording area 22 of the disc (step S14).
For example, if the additional content is downloaded to the recording/reproducing apparatus 10 via the Internet, etc., the additional content may not normally be downloaded due to an unexpected problem, etc., and it is therefore preferred to save the additional content in the disc after temporarily saving it in another area such as the RAM 106 or the internal storage 102.

On the other hand, if the disc is not hybrid-compatible, the recording/reproducing apparatus 10 saves the downloaded additional content into the internal storage 102 or an external memory attached in the external memory slot 103 (step S15). In this example, the recording/reproducing apparatus 10 determines whether the disc is a hybrid-compatible disc, records the downloaded additional content in the recording area 22 of the disc after temporarily saving it in the temporary area in the case of the hybrid disc, and saves the additional content in the internal storage or the external memory in the same manner as a conventional technology if the disc is not hybrid.

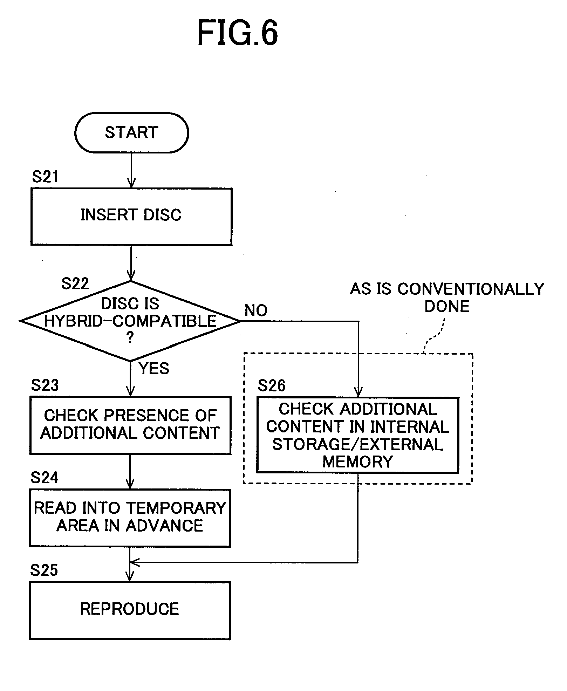

Fig. 6 is a flowchart for explaining an example of the content reproducing processing according to the present invention. If the original content and the additional content recorded on the disc (BD 20) are used for reproduction with the recording/reproducing apparatus 10, since the original content and the additional content are recorded in different areas (the ROM area 21, the recording area 22) in the BD 20, the readout of data by the optical disc drive 101 may not be performed in time. To deal with this situation, if the additional content is recorded in the disc of the package medium, the additional content is reproduced after reading it into the temporary area so as to avoid failure of the reproduction.

In this example, first, a user inserts the disc in the recording/reproducing apparatus 10 to reproduce the contents recorded on the disc (BD 20) (step S21). The recording/reproducing apparatus 10 determines whether the inserted disc is a hybrid-compatible disc (step S22). It is assumed that the recording/reproducing apparatus 10 includes a mechanism determining whether a disc is hybrid.

If the disc is hybrid-compatible, the recording/reproducing apparatus 10 confirms the presence of an additional content in the disc. The additional content in the disc is read into a temporary area in advance (step S24). The temporary area is a storage area built in or accessible by the recording/reproducing apparatus and corresponds to the temporary storage means of the present invention. To the temporary area, for example, in the example of Fig. 2, the RAM 106 or the internal storage 102 is applicable. An external storage, etc., connected to the external memory slot 103 may also be available.
The timing of reading the additional content from the disc is set such that the recording/reproducing apparatus 10 confirms the disc at the time of insertion and starts reading as soon as the presence of the additional content is determined. The additional content temporarily saved in the temporary area is then used to execute the reproducing processing of the original content recorded in the disc (step S25).

On the other hand, if the disc is not hybrid-compatible, the recording/reproducing apparatus 10 confirms the presence of the additional content in the internal storage or the external memory (step S26). In the example of Fig. 2, the confirmation of the additional content is performed for the RAM 106, the internal storage 102, and the external memory connected to the external memory slot 103. The confirmed additional content is then used to execute the reproducing processing of the original content recorded in the disc (step S25). The processing at step S26 is the same as the conventional processing.
The additional content read into the temporary area is deleted when the additional content is no longer necessary such as when ejecting the disc.

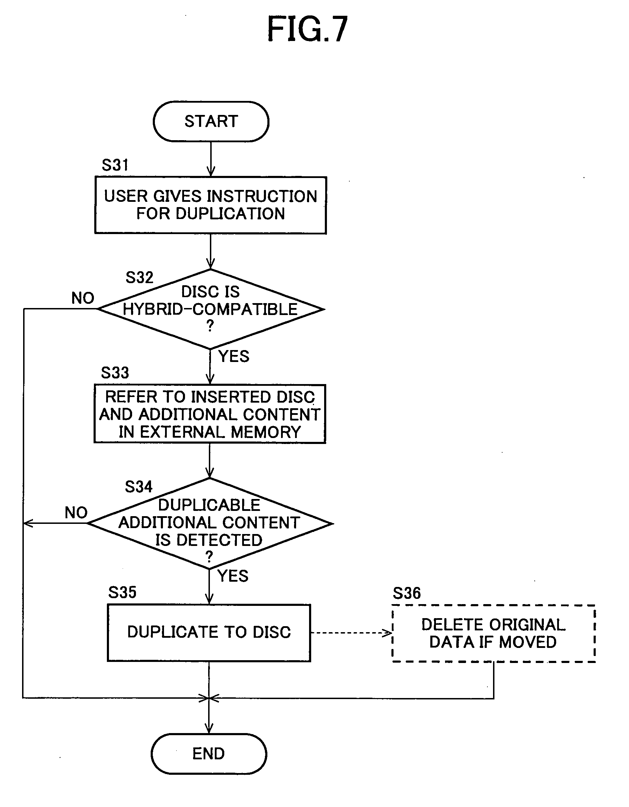

Fig. 7 is a flowchart for explaining an example of the processing for moving an additional content to a disc in the content management method of the present invention.
In this example, an additional content saved in an external memory by a recording/reproducing apparatus not supporting a hybrid disc is duplicated or moved to the recording area 22 of a hybrid disc by a recording/reproducing apparatus supporting a hybrid disc. In this case, if the copying (duplicating) of the content is not permitted by copyright, a moving (move) processing is executed and, if the copying is permitted, the duplication processing is executed. In this example, description will be made of the case that a user arbitrarily gives an instruction for the duplication processing.

First, a user attaches the external memory in the recording/reproducing apparatus 10 supporting a hybrid disc to duplicate (copy) the additional content recorded in the external memory to the disc (BD 20), inserts the disc recording the original content into the recording/reproducing apparatus, and gives an instruction for duplicating the additional content (step S31).
The recording/reproducing apparatus 10 determines whether the inserted disc is a hybrid-compatible disc (step S32). It is assumed that the recording/reproducing apparatus 10 includes a mechanism determining whether a disc is hybrid.

If the disc is hybrid-compatible, the recording/reproducing apparatus 10 refers to the inserted disc and the additional content in the external memory (step S33). If a duplicable additional content is detected by the reference (step S34, YES), the additional content is copied to the disc (step S35). If the additional content is moved because the additional content cannot be duplicated due to copyright, the movement is performed after the deletion of the original data in the external memory (step S36).
On the other hand, if the disc is not hybrid-compatible at step S32 or if the duplicable additional content is not detected at step S34, the processing is terminated.

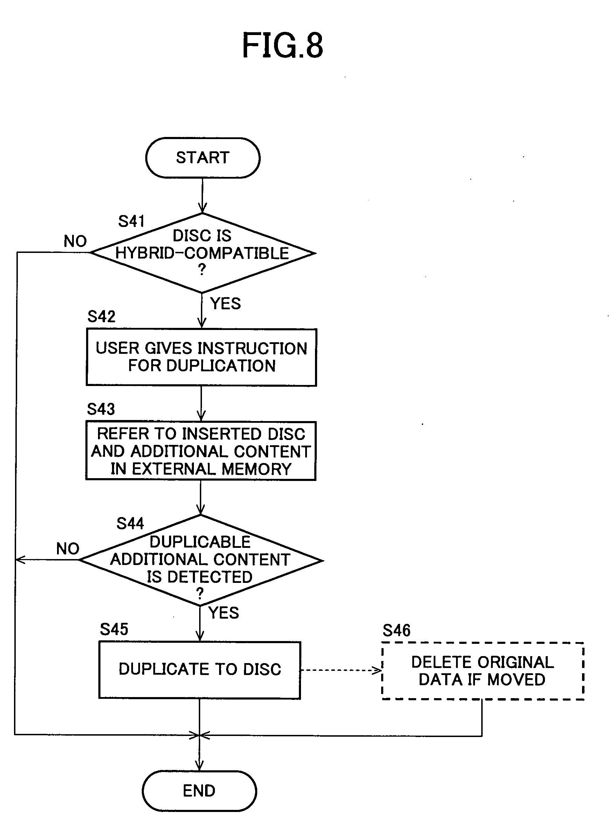

Fig. 8 is a flowchart for explaining another example of the processing for moving an additional content to a disc according to the present invention.
In the example of Fig. 8, unlike the example of Fig. 7, before a user gives an instruction for the duplication of the additional content, the recording/reproducing apparatus 10 detects in advance whether the disc is hybrid-compatible.

In this example, first, the recording/reproducing apparatus 10 determines whether the inserted disc is a hybrid-compatible disc (step S41). It is assumed that the recording/reproducing apparatus 10 includes a mechanism determining whether a disc is hybrid.
If the disc is hybrid-compatible, a user attaches the external memory in the recording/reproducing apparatus 10 supporting a hybrid disc to copy the additional content recorded in the external memory to the disc and gives an instruction for duplicating (copying) the additional content (step S42).

The recording/reproducing apparatus 10 refers to the inserted disc and the additional content in the external memory (step S43). If a duplicable additional content is detected by the reference (step S44, YES), the additional content is duplicated to the disc (step S45). If the additional content is moved because the additional content cannot be duplicated due to copyright, the movement is performed after the deletion of the original data in the external memory (step S46).
On the other hand, if it is determined that the disc is not hybrid-compatible at step S41 or if the copiable additional content is not detected at step S44, the processing is terminated.

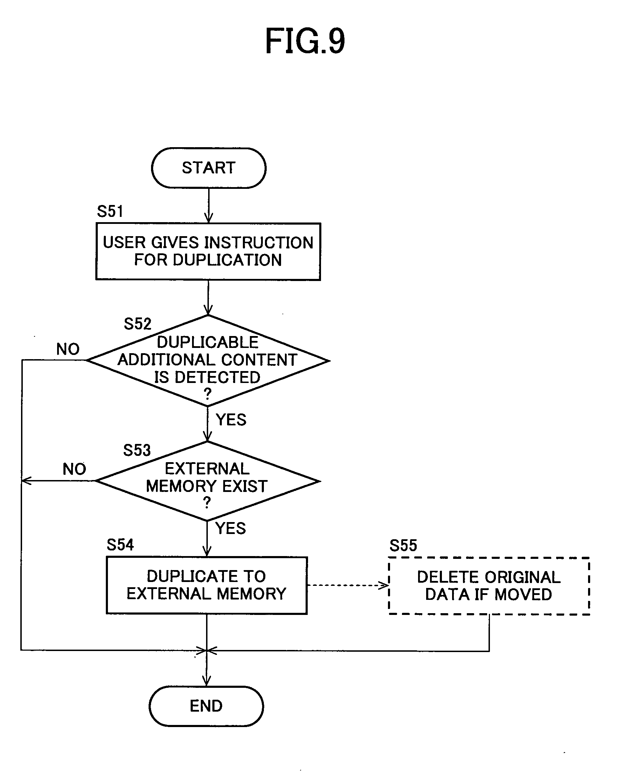

Fig. 9 is a flowchart for explaining an example of the processing for moving an additional content to an external memory according to the present invention.
In this example, an additional content downloaded and saved in an internal storage by a recording/reproducing apparatus not supporting a hybrid disc is moved or duplicated to an external memory. In this case, if the duplicating of the content is not permitted by copyright, the movement (move) processing is executed and, if the duplicating is permitted, the duplication processing is executed.

First, a user gives an instruction for duplicating the additional content to duplicate the additional content recorded in the internal storage of the recording/reproducing apparatus not supporting a hybrid disc (step S51).
The recording/reproducing apparatus 10 detects a copiable additional content from the internal storage (step S52). If a copiable additional content is detected, it is further determined whether the external memory is attached (step S53).

If the external memory exists, the recording/reproducing apparatus 10 copies the additional content stored in the internal storage to the external memory (step S54). If the additional content is moved because the additional content cannot be duplicated due to copyright, the movement is performed after the deletion of the original data in the internal storage (step S55).
On the other hand, if the duplicable additional content is not detected at step S52 or if the external memory is not attached at step S53, the processing is terminated.

### EXPLANATIONS OF REFERENCE NUMERALS

10...recording/reproducing apparatus; 11...recording/reproducing apparatus; 20...BD; 21...ROM area; 22...recording area; 30...content provider; 40...BD-ROM; 41...internal storage; 42...external memory; 101...optimal disc drive; 102...internal storage; 103...external memory slot; 104...decoder; 105...output I/F portion; 106...RAM; 107...EEPROM; 108...ROM; 109...communicating portion; 110...remote control receiving portion; 111...operating portion; and 112...microcomputer.

## Claims

1. A management device of an additional content added to an original content by using a virtual package function defined as an expanded function of Blu-ray, comprising:
an additional content acquiring means that acquires the additional content stored in an external storage means; and
an additional content recording means that records an additional content acquired by the additional content acquiring means in a predetermined recording medium, wherein
the additional content recording means detects a hybrid recording medium that includes both a ROM area that is used only for reading data and a recording area that is used for writing data at any time and records the additional content acquired by the additional content acquiring means in the recording area of the detected hybrid recording medium.

2. The management device of the additional content as defined in claim 1, wherein
when recording the additional content in the recording area of the hybrid recording medium, the additional content recording means recodes the additional content by having one-to-one correspondence to an original content recorded in the ROM area.

3. The management device of the additional content as defined in claim 1 or 2, wherein
the additional content recording means temporarily stores the additional content acquired by the additional content acquiring means in a predetermined temporary storage means and moves the additional content stored in the temporary storage means to the recording area to perform recording of the additional content in the recording area.

4. The management device of the additional content as defined in any one of claims 1 to 3, wherein
the management device of the additional content has a content reproducing means that enables reproduction of an original content and an additional content recorded in the hybrid recording medium, and
when detecting that the additional content is recorded in the hybrid recording medium, the content reproducing means reads the additional content from the recording medium and temporarily stores it into the predetermined temporary storage means, and reproduces the additional content stored in the temporary storage means and the original content recorded in the hybrid recording medium.

5. The management device of the additional content as defined in any one of claims 1 to 4, comprising an additional content duplicating/moving means that duplicates or moves an additional content stored in an external memory attached in the management device of the additional content to the hybrid recording medium, wherein
the additional content duplicating/moving means detects whether the hybrid recording medium is attached in a recordable manner in accordance with input of instruction information instructing the duplication or movement, wherein if the recordable hybrid recording medium is detected, the additional content duplicating/moving means detects whether the additional content available for the duplication or movement exists within the external memory, and wherein if the additional content available for the duplication or movement is detected within the external memory, the additional content duplicating/moving means duplicates or moves the additional content recorded in the external memory into the recording area of the detected hybrid recording medium.

6. The management device of the additional content as defined in any one of claims 1 to 4, comprising an additional content duplicating/moving means that duplicates or moves an additional content stored in an external memory attached in the management device of the additional content to the hybrid recording medium, wherein
the additional content duplicating/moving means detects whether the hybrid recording medium is attached in a recordable manner, wherein when the hybrid recording medium is attached in a recordable manner, if instruction information instructing the duplication or movement is input, the additional content duplicating/moving means detects whether the additional content available for the duplication or movement exists within the external memory, and wherein if the additional content available for the duplication or movement is detected within the external memory, the additional content duplicating/moving means duplicates or moves the additional content recorded in the external memory into the recording area of the hybrid recording medium.

7. The management device of the additional content as defined in claim 5 or 6, wherein
the additional content duplicating/moving means has a function that enables the movement or duplication of the additional content from the hybrid recording medium having the additional content recorded thereon to an external memory, wherein
if instruction information is input that instructs duplication or movement of the additional content from the hybrid recording medium to an external memory, the additional content duplicating/moving means detects whether an additional content available for duplication or movement exists in the hybrid recording medium attached in the management device, wherein if it is detected that the additional content available for the duplication or movement exists in the hybrid recording medium, the additional content duplicating/moving means detects whether an external memory is attached in a recordable manner, and wherein if the recordable external memory is detected, the additional content duplicating/moving means duplicates or moves the additional content recorded in the hybrid recording medium to the detected recordable external memory.

8. A management method of an additional content using a virtual package function defined as an expanded function of Blu-ray, comprising:
an additional content acquiring step of acquiring the additional content stored in an external storage means by a recording/reproducing apparatus; and
an additional content recording step of recording an additional content acquired by the additional content acquiring means into a predetermined recording medium by the recording/reproducing apparatus, wherein
at the additional content recording step, a hybrid recording medium is detected that includes both a ROM area that is used only for reading data and a recording area that is used for writing data at any time and records the additional content acquired by the additional content acquiring means in the recording area of the detected hybrid recording medium.
